# EUROPEAN PATENT APPLICATION

(11) **EP 4 417 330 A1**
(43) Date of publication of application: **21.08.2024**
(21) Application number: 22884004.7
(22) Date of filing: 19.10.2022
(51) Int. Cl.: B09B 3/00, B09B 5/00, C02F 11/00, C02F 3/02, C02F 3/12, B09B 3/40, B01F 27/90, B01F 35/92, C02F 1/66

(54) **METHOD FOR TREATING HIGH-CONCENTRATION FERMENTATION BY-PRODUCTS GENERATED IN AMINO ACID FERMENTATION PROCESS**

(30) Priority: 19.10.2021 KR 20210139165
(71) Applicant: CJ CheilJedang Corporation, Seoul 04560 (KR)
(72) Inventor: KANG, Min Koo, Seoul 04560 (KR); SHIN, Seung Ho, Seoul 04560 (KR); KIM, Min Jun, Seoul 04560 (KR); KIM, So Young, Seoul 04560 (KR)
(74) Representative: Regimbeau
(86) International application number: PCT/KR2022/015909
(87) International publication number: WO 2023/068782

(57) **Abstract**

The present disclosure relates to a method for treating high-concentration fermentation by-products produced in an amino acid fermentation process.

The method of the present disclosure for treating high-concentration fermentation by-products produced in an amino acid fermentation process includes: a decomposition step S10 of introducing fermentation by-products and a thermophilic aerobic microorganism into a decomposition tank provided with a heating device; and a separation step S20 of separating sludge and a remainder produced by reaction between the thermophilic aerobic microorganism and the fermentation by-products in the decomposition step S10.

## Description

### [Technical Field]

The present disclosure relates to a method for treating high-concentration fermentation by-products produced in an amino acid fermentation process.

### [Background Art]

Amino acid fermentation is a process of artificially producing amino acids such as glutamic acid and lysine using microorganisms. This process has made it possible to produce most amino acids such as lysine (see Related Art Document 1: Korean Patent No. 10-0254023).

Amino acids produced by the amino acid fermentation have been used for animal foods, and the like.

Meanwhile, by-products (fermentation by-products containing organic materials) are also produced in the amino acid fermentation process used to produce amino acids, and most of the by-products have been dumped in landfills or into the sea.

Because these fermentation by-products contain organic materials, nitrogen, phosphorus, and the like in large quantities, discharge of fermentation by-products produced in the amino acid production process into a river may cause water pollution and generate an odor. In addition, problems such as eutrophication are caused, and thus a process for treating the fermentation by-products is required.

In addition, although the fermentation by-products are recycled as fertilizers such as liquified fertilizers or raw materials of the fertilizers (see Related Art Document 2: Korean Patent No. 1 0-0716128), it is difficult to use the fermentation by-products as fertilizers due to sticky properties and high-concentration contaminants. Therefore, it is necessary to reduce the concentration of contaminants so that the fermentation by-products can be processed or recycled sommthly.

### [Disclosure]

### [Technical Problem]

The present disclosure has been proposed to solve the above-described problems, and an object of the present disclosure is to provide a method for treating high-concentration fermentation by-products produced in an amino acid fermentation process to effectively treat the fermentation by-products produced in the amino acid fermentation process.

### [Technical Solution]

The present disclosure, which aims to solve the above-described problems, has the following constitutions and features.

A method for treating high-concentration fermentation by-products produced in an amino acid fermentation process includes: a decomposition step S10 of introducing the fermentation by-products and a thermophilic aerobic microorganism into a decomposition tank provided with a heating device; and a separation step S20 of separating sludge and the remainder produced by reaction between the thermophilic aerobic microorganism and the fermentation by-products in the decomposition step S10.

The method may further include a crystallization step S30 of adding the remainder, magnesium, and a pH adjuster to a crystallization tank after the separation step S20.

In addition, the decomposition tank may include: an outer chamber having an accommodating space therein and provided with a heating device disposed at a lower side; an inner pipe provided in the outer chamber and having a plurality of holes; a diffusion device disposed at a lower side of the outer chamber, located under the heating device, and transferring heat; and a stirrer including a vertical shaft disposed in an inner hallow of the inner pipe and a stirring blade protruding horizontally from the vertical shaft, wherein the inner pipe has a plurality of holes.

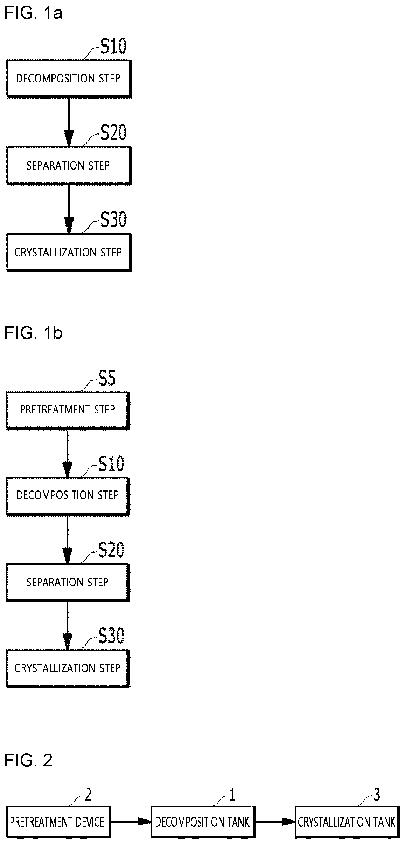

In addition, referring to FIG. 1B, the method may further include a pretreatment step S5 of preheating the high-concentration fermentation by-products using a pretreatment device provided at a front end of the decomposition tank before the decomposition step S10, and the pretreatment device may include a plurality of conductors spaced apart from each other at an interval, a pipe body installed to penetrate the plurality of conductors and allowing the fermentation by-products to flow therein, and a heating member installed to penetrate the plurality of conductors.

In addition , provided is an apparatus for treating high-concentration fermentation by-products including: an outer chamber having an accommodating space therein and provided with a heating device disposed at a lower side; an inner pipe provided in the outer chamber and having a plurality of holes; a diffusion device disposed at a lower side of the outer chamber, located under the heating device, and transferring heat; and a stirrer including a vertical shaft disposed in an inner hallow of the inner pipe and a stirring blade protruding horizontally from the vertical shaft, wherein a thermophilic aerobic microorganism introduced into the outer chamber decomposes the fermentation by-products introduced into the outer chamber upon receiving heat from the heating device.

In addition, the apparatus for treating high-concentration fermentation by-products may further include a pretreatment device configured to preheat the fermentation by-products before supplying the fermentation by-products to the outer chamber, wherein the pretreatment device may include a plurality of conductors spaced apart from each other at an interval, a pipe body installed to penetrate the plurality of conductors and allowing the fermentation by-products to flow therein, and a heating member installed to penetrate the plurality of conductors.

In addition, the apparatus for treating high-concentration fermentation by-products may further include a separation device configured to separate sludge and the remainder produced by decomposition of the fermentation by-products by the thermophilic aerobic microorganism from each other.

In addition, the apparatus for treating high-concentration fermentation by-products may further include a crystallization tank configured to form a struvite calculus from the separated remainder.

### [Advantageous Effects]

As the present disclosure having the above constitutions and features includes the decomposition step and the separation step, effects of efficiently treating organic high-concentration fermentation by-products produced in an amino acid fermentation process may be obtained.

### [Brief Description of Drawings]

FIGS. 1A and 1B are schematic flowcharts for describing a method for treating high-concentration fermentation by-products according to an embodiment of the present disclosure.
FIG. 2 is a schematic block diagram for describing a method for treating high-concentration fermentation by-products.
FIG. 3 is a diagram for describing a decomposition tank.
FIG. 4 is a diagram for describing a pretreatment device.
FIGS. 5 and 6 are graphs illustrating organic material removal efficiency in the case of performing a method for treating high-concentration fermentation by-products according to an embodiment of the present disclosure.
FIG. 7 is a graph illustrating ammonia nitrogen removal efficiency in the case of performing a method for treating high-concentration fermentation by-products according to an embodiment of the present disclosure.
FIG. 8 is a graph illustrating dissolved phosphorus removal efficiency in the case of performing a method for treating high-concentration fermentation by-products according to an embodiment of the present disclosure.

### [Mode of Disclosure]

Hereinafter, while the present disclosure is susceptible to various modifications and alternative forms, specific embodiment thereof has been shown by way of example in the drawings and will be described in detail below. However, it should be understood that it is not intended to limit the present disclosure to the particular forms disclosed, but on the contrary, the present disclosure is to cover all modifications, equivalents, and alternative falling within the spirit and the scope of the disclosure.

The terms used herein are merely used to describe particular aspects (embodiments) and are not intended to limit the present disclosure. An expression used in the singular encompasses the expression of the plural, unless it has a clearly different meaning in the context. In the present disclosure, it is to be understood that the term such as "include" or "consist of" is intended to indicate the existence of features, numbers, steps, operations, components, parts, or any combinations thereof disclosed in the specification, and are not intended to preclude the possibility that one or more other features, numbers, steps, operations, components, parts, or any combinations thereof may exist or may be added.

Unless otherwise defined, all terms including technical and scientific terms used herein have the same meanings as commonly understood by one or ordinary skill in the art to which this application belongs. Additionally, terms, such as those defined in commonly used dictionaries, should be interpreted as having a meaning that is consistent with their meaning in the context of the relevant art and should not be interpreted in an idealized or overly formal sense unless expressly so defined herein.

Throughout the specification, terms "first", "second", and the like are used to distinguish different components from each other and are not limited by a manufactured order, and names of a component may not be the same in the specification and the claims.

Throughout the specification, when an element is referred to as being "connected to" another element, the element may be "directly connected to (in communication with)" the other element, or the element may also be "indirectly connected (in communication with)" the other element with an intervening element therebetween.

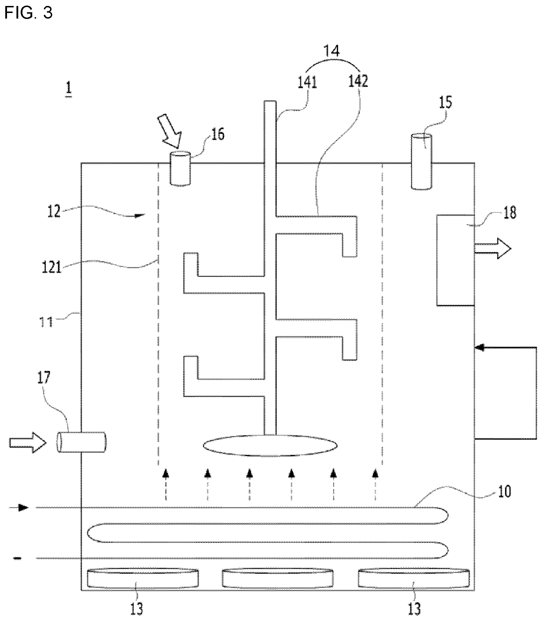

FIGS. 1A and 1B are schematic flowcharts for describing a method for treating high-concentration fermentation by-products according to an embodiment of the present disclosure. FIG. 2 is a schematic block diagram for describing a method for treating high-concentration fermentation by-products. FIG. 3 is a diagram for describing a decomposition tank.

The method for treating high-concentration fermentation by-products according to an embodiment of the present disclosure is an effective method for treating high-concentration fermentation by-products produced in an amino acid fermentation process, and will be referred to as 'the present method' hereinafter for descriptive convenience.

Referring to FIGS. 1A, 1B, and 2, the method of the present disclosure (the method for treating high-concentration fermentation by-products according to an embodiment of the present disclosure: a method for treating high-concentration fermentation by-products produced in an amino acid fermentation process) includes a decomposition step S10 and a separation step S20.

Referring to FIGS. 1A to 3, the decomposition step S10 is a process of feeding the fermentation by-products (high-concentration fermentation by-products) and a thermophilic aerobic microorganism into a decomposition tank 1 provided with a heating device 10.

In the decomposition step S10, the fermentation by-products may be mixed and treated with waste sludge produced in wastewater treatment facilities or the like in the decomposition tank 1.

As described above, the fermentation by-products introduced into the decomposition tank 1 in the decomposition step S10 are produced in an amino acid fermentation process.

Since the fermentation by-products contain organic materials, discharge of the fermentation by-products into a river may cause water pollution and generate an odor. The fermentation by-products containing contaminants such as the organic materials may not be suitable to be used as fertilizers, and the like. The decomposition step S10 is a process for decomposing the organic materials of the fermentation by-products.

Fermentation by-products are produced in an amino acid fermentation process, and the types of fermentation by-products produced in the fermentation process may vary according to amino acid products to be produced, and thus the decomposition tank 1 may be provided in a plural number in the decomposition step S10.

Referring to FIG. 3, the decomposition tank 1 may include an outer chamber 11 having an accommodating space therein, and the accommodating space of the outer chamber 11 is a space in which the fermentation by-products and the thermophilic aerobic microorganism are contained.

In this regard, the heating device 10 may be disposed, for example, at a lower side of the outer chamber 11. More specifically, the outer chamber 11 may include a bottom and side walls extending upward from edges of the bottom. A diffusion device 13, which will be described below, may be disposed on the bottom and the heating device 10 may be connected to the outer chamber 11 by various known methods to be disposed at an upper portion than the diffusion device 13 in the accommodating space.

In this regard, the upper portion (upper side, upper end, upper surface, or the like) refers to an upper portion (upper side, upper end, upper surface, or the like) based on FIG. 3, and the lower portion (lower side, lower end, lower surface, or the like) refers to a lower portion (lower side, lower end, lower surface, or the like) based on FIG. 3, which will be applied to the following descriptions in the same manner.

The heating device 10 may include an electrical resistor as an example, or include a pipe and a hot fluid (e.g., steam) flowing in the pipe as another example.

The thermophilic aerobic microorganism may be, for example, a microorganism belonging to the genus *Bacillus* such as *Thermophilic Bacillus spp., Thermus spp., etc.* The thermophilic aerobic microorganism consumes oxygen at a high temperature (about 50°C to 75°C) and ingests organic materials of the fermentation by-products as nutrients. In this regard, the ingested organic materials are oxidatively decomposed by the thermophilic aerobic microorganism and carbon dioxide, ammonia, and water are discharged therefrom.

Although the thermophilic aerobic microorganism is effective on decomposition of organic materials, activity thereof is expressed at a relatively high temperature, and thus a high temperature should be maintained during a decomposition process of the organic materials using the thermophilic aerobic microorganism. A large amount of energy is required to maintain a high temperature during a reaction process, and particularly, it is difficult to maintain a high temperature in a decomposition tank because a temperature of new fermentation by-products flowing into the decomposition tank is relatively low in a continuous process in which fermentation by-products to be decomposed are continuously introduced. Therefore, it is important to continuously keep the temperature of the process at a high level during a decomposition process of fermentation by-products using a thermophilic aerobic microorganism.

Therefore, in the case where the fermentation by-products and the thermophilic aerobic microorganism are introduced into the decomposition tank 1 provided with the heating device 10 in the above-described decomposition step S10, and the organic materials of the fermentation by-products are decomposed by the thermophilic aerobic microorganism by increasing a temperature of the inside of the outer chamber 11 to about 50°C to 75°C (preferably, about 55°C) using the heating device 10 and supplying oxygen into the decomposition tank 1. The decomposition tank 1 may include an injector 15 to supply oxygen to the inside of the outer chamber 11.

In general, biodegradation is much faster at a high temperature than at a moderate temperature. Because, in the decomposition step S10, the decomposition tank 1, in which the decomposition step S10 is conducted, includes the heating device 10 configured to supply heat to the outer chamber 11, the accommodating space of the outer chamber 11 may be maintained at a high temperature from the early stage and the use of the thermophilic aerobic microorganism is possible and thus it is advantageous in that high-concentration fermentation by-products may be effectively decomposed.

Snice the thermophilic aerobic microorganism contained in the decomposition tank 1 generates oxidation heat while decomposing the organic materials of the fermentation by-products and the oxidation heat is used to maintain the temperature of the inside of the decomposition tank 1 (outer chamber 11), the fermentation by-products may be decomposed by using a minimum energy.

Referring to FIG. 3, provided is a decomposition tank 1 of an apparatus for treating high-concentration fermentation by-products including: an outer chamber 11 having an accommodating space therein and provided with a heating device 10 disposed at a lower side; an inner pipe 12 disposed in the outer chamber 11 and having a plurality of holes; a diffusion device 13 disposed at a lower side of the outer chamber 11, located under the heating device 10, and transferring heat; and a stirrer 14 including a vertical shaft 141 located in an inner hollow of the inner pipe 12 and stirring blades 142 horizontally protruding from the vertical shaft 141. The thermophilic aerobic microorganism introduced into the outer chamber 11 from the decomposition tank 1 decomposes the fermentation by-products flowing into the outer chamber 11 upon receiving heat supplied by the heating device 10.

The decomposition tank 1 may include an inner pipe 12 disposed in the outer chamber 11 and having a width smaller than that of the outer chamber 11.

In this regard, the inner pipe 12 may have open upper side and lower side and have a hollow inside. A side wall surrounding the hollow of the inner pipe 12 may have a plurality of holes 121 formed by perforation.

A mixture of the fermentation by-products and the thermophilic aerobic microorganism contained in the inner pipe 12 is primarily separated from the rest area of the outer chamber 11 by the holes 121 of the side wall of the inner pipe 12. As described above, because oxidation heat is generated during a decomposition process of the fermentation by-products conducted by the thermophilic aerobic microorganism and heat supplied by the heating device 10 provided at the lower side of the inner pipe 12 is directly transferred to the inner pipe 12, the inside of the inner pipe 12 may be kept at a relatively high temperature compared to outer areas of the inner pipe 12. In addition, the inside of the inner pipe 12 is separated from the outside of the decomposition tank 1 by double walls, i.e., the outer wall of the outer chamber 11 and the wall of the inner pipe 12, and thus external temperature less affects the inside of the inner pipe 12 and heat loss to the outside decreases.

Also, the decomposition tank 1 may include a diffusion device 13 disposed at a lower side of the outer chamber 11 (on the bottom), located under the heating device 10, and transferring heat supplied by the heating device 10.

For example, the diffusion device 13 may include blades connected to a motor to rotate and an inlet connected to a pump or the like to supply gas such as oxygen or air upward.

Heat supplied by the heating device 10 may be easily diffused in the accommodating space by the diffusion device 13, so that decomposition of the organic materials of the thermophilic aerobic microorganism may be performed more effectively.

In the case where the diffusion device 13 includes the inlet, a high concentration of oxygen may be supplied to the accommodating space enabling more effective thermophilic aerobic digestion.

For example, air or oxygen injected into the outer chamber 11 via the injector 15 or the inlet may be at a high temperature which keeps the inner temperature of the outer chamber 11.

The diffusion device 13 may assist the thermophilic aerobic microorganism and the fermentation by-products to uniformly circulate in the outer chamber 11 and the inner pipe 12.

Also, the decomposition tank 1 may include a stirrer 14 including a vertical shaft 141 provided in the inner hollow of the inner pipe 12 and stirring blades 142 protruding horizontally from the vertical shaft 141. The vertical shaft 141 may be connected to the outer chamber 11 or the inner pipe 12 via various methods known in the art.

The stirrer 14 facilitates decomposition of the organic materials by the thermophilic aerobic microorganism by stirring the fermentation by-products and the thermophilic aerobic microorganism and diffusing the heat supplied by the heating device 10 and oxygen supplied via the injector 15. In addition, the stirrer 14 may be provided in the inner pipe 12 as can be seen in FIG. 3, and the stirring of the stirrer 14 in the inner pipe 12 may allow the thermophilic aerobic microorganism to decompose the fermentation by-products more quickly, and accordingly, relatively more oxidation heat may be generated in the inner pipe 12. Therefore, the inner temperature of the inner pipe 12 may be kept at a relatively high level.

As described above, because the decomposition tank 1 used to perform the decomposition step S10 has a double reactor structure including the outer chamber 11 and the inner pipe 12 and the inner pipe 12 has the holes 121, the thermophilic aerobic microorganism, the fermentation by-products, oxygen, heat, and the like, which move by the stirrer 14, the diffusion device 13, and the like, non-uniformly move in various directions to improve mixability and a contact area between the thermophilic aerobic microorganism and the fermentation by-products is enlarged to perform decomposition (thermophilic aerobic digestion) of the organic materials by the thermophilic aerobic microorganism more effectively. Therefore, the holes 121, together with the stirrer 14, may be used as a way of mixing the fermentation by-products, oxygen, and the thermophilic aerobic microorganism. In addition, in the case where the fermentation by-products having a low concentration is introduced, the inner pipe 12 may have a function in inhibiting a decrease in thermophilic aerobic digestion efficiency caused by introduction of the low-concentration fermentation by-products by concentrating the fermentation by-products while the reaction proceeds.

Furthermore, the decomposition tank 1 may include a filtering material (not shown) contained in the outer chamber 11 or the inner pipe 12 to enlarge the contact area between the thermophilic aerobic microorganism and the fermentation by-products and to increase reaction efficiency of the thermophilic aerobic digestion.

In addition, the decomposition tank 1 may include at least one of a first spray nozzle 16, a front end of which is in communication with a fermentation by-product supply unit (not shown) and a rear end of which is in communication with the upper side of the outer chamber 11, and a second spray nozzle 17, a front end of which is in communication with a fermentation by-product supply unit (not shown) and a rear end of which is in communication with the lower side of the outer chamber 11.

The supply unit (not shown) supplies the fermentation by-products to the inside of the outer chamber 11 via at least one of the first spray nozzle 16 and the second spray nozzle 17.

For example, the first spray nozzle 16 and the second spray nozzle 17 may be those used in a scrubber and may improve dispersity of the fermentation by-products supplied to the inside of the outer chamber 11.

The decomposition tank 1 may also be provided with a connector 18 to transmit the remainder and/or sludge produced after decomposition of the fermentation by-products to subsequent processes (separation step S20 and crystallization step S30).

Referring to FIGS. 1B, 2, and 4, the present method may include a pretreatment step S5 for preheating the fermentation by-products using a pretreatment device 2 provided at the front end of the decomposition tank 1.

In this regard, the front end and rear end are described based on a moving direction of the fermentation by-products in the present method, and the fermentation by-products of the present method move from the front end to the rear end.

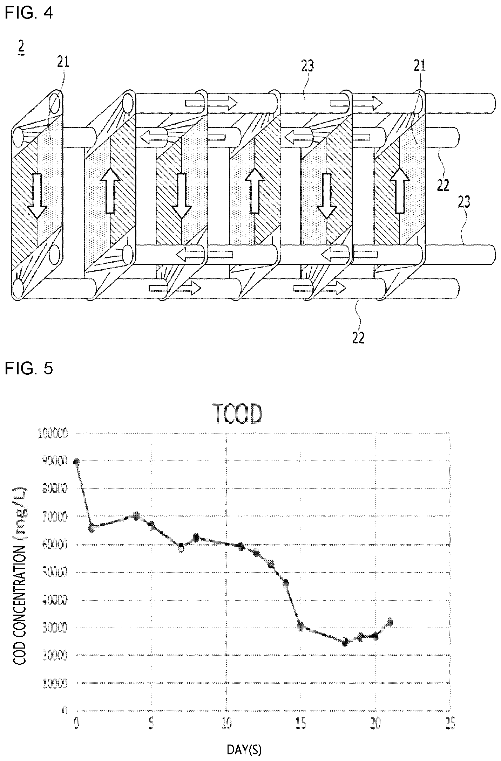

The pretreatment device 2 will be described in more detail with reference to FIG. 4. The pretreatment device 2 may include a plurality of plate-shaped conductors 21 spaced apart from each other at an interval, a pipe body 22 installed to penetrate the plurality of conductors 21 and allowing the fermentation by-products to move therein, and a heating member 23 installed to penetrate the plurality of conductors 21.

The heating member 23 may include an electrical resistor as an example or include a pipe and a hot fluid (e.g., steam) flowing in the pipe as another example.

Heat supplied by the heating member 23 is continuously transferred to the fermentation by-products moving in the pipe body 22 via the plurality of conductors 21 so as to preheat the fermentation by-products.

The present method may have advantages of facilitating thermophilic aerobic reaction by including the pretreatment step S5 of preheating the fermentation by-products such that fluidity is improved by reducing the viscosity of the fermentation by-products and an effective reaction of the thermophilic aerobic microorganism occurs by inhibiting adhesion thereof to the decomposition tank 1 and the like.

In addition, because heat loss of the thermophilic aerobic microorganism caused by heat-exchange between the fermentation by-products and the thermophilic aerobic microorganism may be prevented by preheating the fermentation by-products, advantages of reduction in energy consumption to increase the temperature of the accommodating space in the outer chamber 11 may be obtained.

Referring to FIGS. 1A and 2, the separation step S20 is a process of separating the sludge and the remainder produced by reaction (thermophilic aerobic digestion) between the thermophilic aerobic microorganism and the fermentation by-products in the decomposition step S10.

The sludge may be produced as the thermophilic aerobic microorganism grows, proliferates, and aggregates by intaking and decomposing the organic materials of the fermentation by-products in the decomposition step S10, and the remainder may refer to a liquid-phase material in which at least some organic materials of the fermentation by-products are decomposed after the decomposition step S10.

The separation step S20 may be performed, for example, by a solid-liquid separator, and the solid-phase sludge may be separated from the liquid-phase remainder in the separation step S20. As another example, the sludge may be separated from the liquid phase by using a ceramic membrane depending on physical properties of by-products. The solid-liquid separator and the like may be any device used to separate a solid-phase material from a liquid-phase material commonly used in various fields, and thus detailed descriptions thereof will be omitted.

The sludge separated from the remainder in the separation step S20 may be used as a high value-added organic fertilizer to reduce an amount of waste produced in facilities to conduct amino acid fermentation processes.

Meanwhile, the remainder may contain a large amount of nitrogen and phosphorus, and discharge of the remainder containing nitrogen and phosphorus into a river may cause eutrophication, a red tide phenomenon on coasts, ammonia toxicity in fish, and dissolved oxygen deficiency in water, ammonia in water may increase a chlorine demand, and nitrate nitrogen in drinking water at a high concentration may have a hazardous effect on health.

In addition, overproduction of algae resulting from an inflow of nitrogen, phosphorus, and the like into a water supply source causes problems such as uncomfortable sensation in tap water in terms of taste and smell and clogging of a sand filter used in a water purification process.

Therefore, the present method may include a crystallization step S30 of adding magnesium and a pH adjuster to a crystallization tank 3 together with the remainder after the separation step S20.

A crystallization tank 3 may include a container having a space into which the remainder and the like are introduced. The crystallization tank 3 may be connected to the rear end of the decomposition tank 1.

For example, magnesium chloride may be introduced into the crystallization tank 3 in the crystallization step (S30), and ammonia nitrogen, phosphorate-phosphorus, and magnesium contained in the remainder may undergo struvite crystallization to form a struvite calculus in the crystallization tank 3 at a pH of 6 or higher. Therefore, the remainder from which nitrogen and phosphorus are removed may be discharged.

As the pH adjuster, for example, hydrochloric acid and sodium hydroxide may be used. Hydrochloric acid may be used to lower the pH level, and sodium hydroxide may be used to raise the pH level.

In the crystallization step S30, the pH of the remainder may be 6 or higher. More preferably, the pH may be 7 or higher.

Although not shown herein, the present method may include anaerobic digestion of fermentation by-products in an anaerobic digestion tank before the decomposition step S10 and before or after the pretreatment step S5.

The method and apparatus for treating high-concentration fermentation by-products according to an embodiment of the present disclosure have been described above.

Hereinafter, changes in various values were identified, by experiments, after removing organic materials using the above-described method and apparatus for treating high-concentration fermentation by-products.

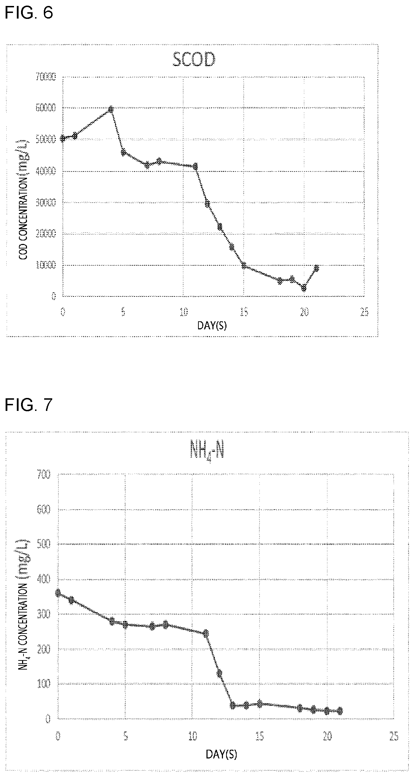

FIGS. 5 and 6 are graphs illustrating organic material removal efficiency in the case of performing a method for treating high-concentration fermentation by-products according to an embodiment of the present disclosure.

FIG. 5 shows total chemical oxygen demand (TCOD) of a solution remaining after removing organic materials, and FIG. 6 shows soluble chemical oxygen demand (SCOD) thereof. The "chemical oxygen demand (COD)" refers to an amount of an oxidizer, converted into an amount of oxygen, consumed to oxidize materials to be oxidized (mainly, organic materials) present in sea water or the like using the oxidizer under certain conditions. In this regard, the TCOD refers to an amount of organic materials including particulate organic material and dissolved organic materials, and the SCOD refers to an amount of dissolved organic materials.

Referring to FIGS. 5 and 6, it may be confirmed that the TCOD value rapidly decreased immediately after initiating the treatment of high-concentration fermentation by-products according to the present disclosure. The SCOD value slightly increased within 5 days, and rapidly decreased thereafter. Both the TCOD and SCOD values were the lowest levels within 20 days after performing the treatment indicating that the treatment of high-concentration fermentation by-products may be completed within 20 days.

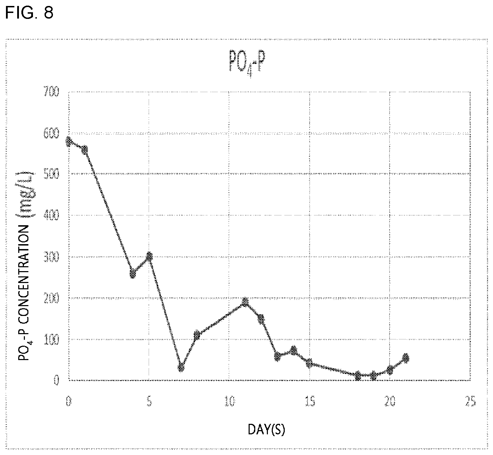

FIG. 7 is a graph illustrating ammonia nitrogen removal efficiency in the case of performing a method for treating high-concentration fermentation by-products according to an embodiment of the present disclosure. FIG. 8 is a graph illustrating dissolved phosphorus removal efficiency in the case of performing a method for treating high-concentration fermentation by-products according to an embodiment of the present disclosure.

Referring to FIGS. 7 and 8, it may be confirmed that the concentrations of both dissolved nitrogen and dissolved phosphorus contained in the solution of high-concentration fermentation by-products decrease immediately after initiating treatment of the by-products. In addition, concentrations of dissolved nitrogen and dissolved phosphorus reach the lowest levels at about 15 days after the treatment of fermentation by-products is initiated, indicating that treatment of the high-concentration fermentation by-products has been substantially completed.

Therefore, upon determination based on the numerical values of the dissolved nitrogen and dissolved phosphorus, it was confirmed that the treatment of the high-concentration fermentation by-products may be completed within 15 days.

While the present disclosure has been described above with reference to the accompanying drawings, it will be apparent to those skilled in the art that modifications and variations could be made without departing from the scope of the present disclosure as defined by the appended claims.

## Claims

1. A method for treating high-concentration fermentation by-products, the method comprising:
a decomposition step S10 of introducing fermentation by-products and a thermophilic aerobic microorganism into a decomposition tank provided with a heating device; and
a separation step S20 of separating sludge and a remainder produced by reaction between the thermophilic aerobic microorganism and the fermentation by-products in the decomposition step S10.

2. The method according to claim 1, further comprising a crystallization step S30 of forming a struvite calculus by adding magnesium and a pH adjuster to the remainder separated after the separation step S20.

3. The method according to claim 1, further comprising a pretreatment step S5 of preheating the high-concentration fermentation by-products before the decomposition step S10.

4. An apparatus for treating high-concentration fermentation by-products comprising:
an outer chamber having an accommodating space therein and provided with a heating device disposed at a lower side;
an inner pipe provided in the outer chamber and having a plurality of holes;
a diffusion device disposed at a lower side of the outer chamber, located under the heating device, and transferring heat; and
a stirrer including a vertical shaft disposed in an inner hallow of the inner pipe and a stirring blade protruding horizontally from the vertical shaft,
wherein a thermophilic aerobic microorganism introduced into the outer chamber decomposes fermentation by-products introduced into the outer chamber upon receiving heat supplied by the heating device.

5. The apparatus according to claim 4, further comprising a pretreatment device configured to preheat the fermentation by-products before supplying the fermentation by-products to the outer chamber,
wherein the pretreatment device comprises a plurality of conductors spaced apart from each other at an interval, a pipe body installed to penetrate the plurality of conductors and allowing the fermentation by-products to flow therein, and a heating member installed to penetrate the plurality of conductors.

6. The apparatus according to claim 4, further comprising a separation device configured to separate sludge and a remainder produced by decomposition of the fermentation by-products by the thermophilic aerobic microorganism from each other.

7. The apparatus according to claim 6, further comprising a crystallization tank configured to form a struvite calculus from the separated remainder.
